# EUROPÄISCHE PATENTSCHRIFT

(11) **EP 2 368 467 B1**
(45) Veröffentlichungstag und Bekanntmachung des Hinweises auf die Patenterteilung: **16.09.2015**
(21) Anmeldenummer: 11000934.7
(22) Anmeldetag: 05.02.2011
(51) Int. Cl.: A47J 31/60, A47J 31/44

(54) **Elektrische Getränkezubereitungsmaschine**
Electric drink preparation machine
Machine de préparation de boissons électrique

(30) Priorität: 23.03.2010 DE 102010012562
(43) Veröffentlichungstag der Anmeldung: 28.09.2011
(73) Patentinhaber: Severin Elektrogeräte GmbH, 59846 Sundern (DE)
(72) Erfinder: Kroesen, Klaus, 46509 Xanten (DE); Hilckmann, Marius, 58453 Witten (DE); Schmalor, Christian, 59846 Sundern (DE); Klüppel, Clemens, 58809 Neuenrade (DE)
(74) Vertreter: Köchling, Conrad-Joachim

(56) Entgegenhaltungen:
- EP-A1- 1 561 407
- EP-A1- 1 656 863
- EP-A1- 1 911 382
- DE-A1-102010 012 562

## Beschreibung

Die Erfindung betrifft eine elektrische Getränkezubereitungsmaschine mit einer Pumpe für die Zufuhr von Frischwasser, einer Heizung zur Erhitzung des Frischwassers, einer Einrichtung zur Zufuhr von Milch, einer Einrichtung zur Zufuhr von Luft, einer Mischeinrichtung zur Mischung von Heißwasser, Wasserdampf, Milch und/oder Luft, sowie einer Abgabevorrichtung für die Mischung an ein Behältnis, wobei die Mischeinrichtung an den Wasserdampf- oder Heiß-Wasser-Auslauf der Heizung angeschlossen ist und in die Mischeinrichtung eine Luftzufuhrleitung und eine Milchzufuhrleitung mündet, zwischen Heizung und Mischeinrichtung ein Schaltventil eingefügt ist, das in einer ersten Schaltstellung den Ausgang der Heizung mit der Mischeinrichtung verbindet und in einer zweiten Schaltstellung den Ausgang der Heizung mit einer Leitung verbindet, die zu einem zweiten Auslass, insbesondere einer Auffangschale führt.

Derartige Getränkezubereitungsmaschinen sind beispielsweise aus der EP 1 656 863 A1 bekannt.

Bei einer bekannten Getränkezubereitungsmaschinen wird Milchschaum erzeugt, indem mittels der elektrischen Heizung, beispielsweise mittels eines Durchlauferhitzers, durch stoßweises Pumpen mit der Frischwasser zuführenden Pumpe Wasserdampf erzeugt wird. Dieser Wasserdampf wird der Mischeinrichtung, beispielsweise einem Ejektor, zugeführt. Der Ejektor ist an eine Leitung angeschlossen, die zu einem Behälter führt, in dem sich Milch befindet. Über diese Leitung wird durch den Ejektor Milch angesaugt. Gegebenenfalls ist ein weiterer Zugang für die Zuführung von Luft zum Ejektor vorgesehen, so dass über die zugeführte Luftmenge die Milchschaumerzeugung variiert werden kann.

Derartige Vorrichtungen sind beispielsweise in eine Kaffeemaschine integriert, mit der auch Kaffee oder ein anderes Brühgetränk erzeugt werden kann. Bei der bisher bekannten Anordnung kommt es zu einem schnellen Verschmutzen der sehr kleinen Luftdüse, da diese direkt am Ejektor angebracht ist, so dass eine Verschmutzung durch Milch oder Milchschaum erfolgt.

Des Weiteren kommt es gegen Ende der Milchschaumerzeugung zu einem starken und unkontrollierten Nachtropfen des Milchschaums, bis die Heizung keinen Dampf mehr erzeugt.

Aus der EP 1 656 863 A1 ist eine Getränkezubereitungsmaschine gattungsgemäßer Art bekannt.

Aus der EP 1 561 407 A1 ist eine Getränkezubereitungsmaschine bekannt, die eine Spüleinrichtung mit einer Drossel aufweist.

Ausgehend von diesem Stand der Technik liegt der Erfindung die Aufgabe zugrunde, ein starkes und unkontrolliertes Vor- und Nachtropfen bei der Milchschaumerzeugung zu vermeiden wobei in einfacher Weise und mit hoher Betriebssicherheit eine Umstellung in unterschiedliche Betriebsweisen möglich ist.

Zur Lösung dieser Aufgabe schlägt die Erfindung vor, dass in die zum zweiten Auslass führende Leitung ein Absperrventil eingefügt ist, mittels dessen die Leitung gesperrt oder geöffnet werden kann, und

Dass von der zum zweiten Auslass führenden Leitung zwischen Absperrventil und Schaltventil eine dritte Leitung abgezweigt ist, die mit der Milchzufuhrleitung verbunden ist und in die eine Drossel eingefügt ist.

Durch die Anordnung des Schaltventils ist es möglich, in der ersten Schaltstellung in üblicher Weise Milchschaum zu erzeugen oder auch Milch zu erhitzen, weil dann der Ausgang der Heizung mit der Mischeinrichtung verbunden ist und die Mischeinrichtung entsprechend heiße Milch oder Milchschaum an ein entsprechendes Behältnis abgeben kann. Gegen Ende des Milcherhitzungsvorganges oder Milchschaumvorganges kann durch Betätigung eines Schalters oder durch eine elektronische Schaltung das Schaltventil in die zweite Schaltstellung verstellt werden. In dieser Schaltstellung ist der Ausgang der Heizung mit dem zweiten Auslass verbunden, der zu einer Auffangschale führt, so dass nicht am Ausgang der Mischeinrichtung ein Nachtropfen erfolgt, sondern der Heißdampf und/oder das heiße Wasser wird direkt zu der Auffangschale beziehungsweise dem zweiten Auslass geführt, wo es störungsfrei abtropfen kann.

Zusätzlich ist in die zum zweiten Auslass führende Leitung ein Absperrventil eingefügt, mittels dessen die Leitung gesperrt oder geöffnet werden kann.

Des Weiteren ist von der zum zweiten Auslass führenden Leitung zwischen Absperrventil und Schaltventil eine dritte Leitung abgezweigt, die mit der Milchzufuhrleitung verbunden ist und in die eine Drossel eingefügt ist.

Durch diese Anordnung wird erreicht, dass die Drossel nicht mehr unmittelbar im Bereich der Mischeinrichtung angeordnet ist, sondern relativ weit von dieser entfernt, so dass sie nicht durch Milch oder Milchschaum verschmutzen kann. Durch entsprechende Schaltung kann über die Drossel Luft zu der Mischeinrichtung zugeführt werden, sofern die Milchschaumerzeugung erwünscht ist, oder aber die Luftzufuhr kann gesperrt werden, sofern es erwünscht ist, lediglich heiße Milch zu erzeugen.

Eine Besonderheit ist ferner, dass in der ersten Schaltstellung des Schaltventils das Absperrventil geöffnet ist, so dass über den zweiten Auslass Luft über die Drossel zur Mischeinrichtung geführt ist.

Diese Schaltstellung entspricht der Betriebsweise der Vorrichtung, bei der Milchschaum erzeugt werden soll.

Des Weiteren wird ermöglicht, dass in der zweiten Schaltstellung des Schaltventils das Absperrventil geöffnet ist, so dass Heißdampf über das Absperrventil zum zweiten Auslass geführt ist.

In diese zweite Schaltstellung wird umgeschaltet, wenn die Milchschaumerzeugung beendet ist, so dass dann der restliche Wasserdampf nicht mehr über die Mischeinrichtung, sondern über das Absperrventil zum zweiten Auslass geführt wird.

Zudem ist ermöglicht, dass in der ersten Schaltstellung des Schaltventils das Absperrventil geschlossen ist, so dass der gesamte Dampfstrom ohne Luftanreicherung zur Mischeinrichtung geführt ist.

Durch diese Anordnung kann erreicht werden, dass beim Betrieb der Vorrichtung lediglich Milch erhitzt wird, ohne dass diese mit Luft angereichert wird, also kein Milchschaum entsteht.

Zudem ist ermöglicht, dass in der zweiten Schaltstellung des Schaltventils, das Absperrventil geschlossen ist und Heißwasser über die Drossel zur Mischeinrichtung geführt ist und nachfolgend oder alternativ das Schaltventil in die erste Schaltstellung verstellt ist, so dass Heißwasser direkt zur Mischeinrichtung geführt ist.

Bei dieser Betriebsweise wird die Drossel durch Heißdampf oder Heißwasser gereinigt, wobei anschließend oder auch alternativ das Schaltventil in die erste Schaltstellung verstellt wird, so dass dann das Heißwasser direkt zur Mischeinrichtung geführt wird. Zum Zwecke der Reinigung ist diese Anordnung vorteilhaft, wobei beispielsweise zunächst kurzzeitig Heißwasser über die Drossel zur Mischeinrichtung geführt wird und dann Heißwasser nur über die Mischeinrichtung geführt wird, wobei das in der Drossel möglicherweise noch befindliche Restwasser mitgesaugt wird, so dass die Drossel gereinigt ist.

Bevorzugt ist dabei vorgesehen, dass die Drossel regulierbar ist.

Die Regulierung der Drossel ermöglicht es, das Verhältnis von Schaum zu Milch einzustellen.

Alternativ kann durch getaktetes Schalten des Ventiles das Verhältnis Schaum zu Milch eingestellt werden.

In an sich bekannter Weise ist vorgesehen, dass die Mischeinrichtung eine nach Art einer Venturi-Düse ausgebildete Mischdüse ist.

Als Besonderheit wird noch angesehen, dass das Schaltventil und/oder das Absperrventil als Magnetventil ausgebildet ist.

Vorzugsweise sollte die Reinigung des Systems nach jeder Milchschaumerzeugung erfolgen.

Die unterschiedlichen Abläufe können durch entsprechende Schalterbetätigung durch den Benutzer eingeleitet werden. Es ist aber auch möglich, dass die unterschiedlichen Schaltzustände durch eine elektronische Steuerung automatisch eingestellt werden, wenn der Benutzer ein Bedienprogramm "Milchschaumerzeugung" oder ein Bedienprogramm "Heißmilcherzeugung" oder ein Bedienprogramm "Reinigung" aufruft.

Die Erfindung ist nachstehend anhand einer Zeichnung erläutert.

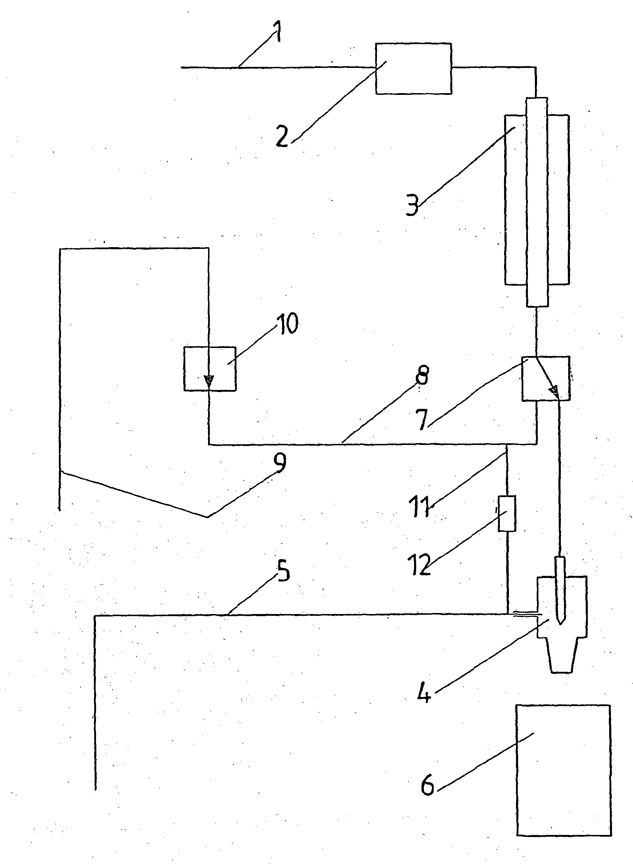

In der Zeichnung sind nur die wesentlichen Elemente der Getränkezubereitungsmaschine dargestellt und im Folgenden beschrieben.

Die Maschine ist mit einer Leitung 1 an einen Wassertank oder an ein Wasserreservoir angeschlossen, so dass über die Leitung 1 Frischwasser zugeführt werden kann. Das Frischwasser wird mittels einer in die Leitung integrierten Pumpe 2 angesaugt und nachfolgend in eine elektrische Heizung 3, die beispielsweise als elektrischer Durchlauferhitzer ausgebildet ist, gepumpt. In der Heizung 3 wird vorzugsweise Wasserdampf erzeugt, der dann über entsprechende Leitungen zu einer Mischeinrichtung 4 geführt wird. Diese Mischeinrichtung ist über eine Leitung 5 an einen Milchvorratsbehälter angeschlossen, so dass über die Leitung 5 Milch in die Mischeinrichtung 4 eingesaugt werden kann. Zusätzlich weist die Mischeinrichtung 4 einen Anschluss zur Zuführung von Luft auf, so dass die zugeführte Milch mit Wasserdampf und Luft vermischt als Schaum an der Abgabeöffnung der Mischvorrichtung austritt und in ein Behältnis 6 abläuft.

Erfindungsgemäß ist zwischen die Heizung 3 und die Mischeinrichtung 4 ein Schaltventil 7 eingeschaltet, das in einer ersten Schaltstellung, die in der Zeichnung gezeigt ist, den Ausgang der Heizung 3 mit dem Eingang der Mischeinrichtung 4 verbindet. In der zweiten alternativen Schaltstellung, die in der Zeichnung nicht gezeigt ist, ist der Ausgang der Heizung 3 über das Schaltventil 7 mit einer Leitung 8 verbunden, die zu einem zweiten Auslass 9, beispielsweise einer Auffangschale, führt. In die zum zweiten Auslass 9 führende Leitung 8 ist zusätzlich ein Absperrventil 10 eingeschaltet, mittels dessen die Leitung gesperrt oder geöffnet werden kann. Des Weiteren ist von der zum zweiten Auslass führenden Leitung 8 zwischen Absperrventil 10 und Schaltventil 7 eine dritte Leitung 11 abgezweigt, die mit der Milchzuführleitung 5 verbunden ist und in die eine Drossel 12 eingeschaltet ist. Die Drossel 12 ist vorzugsweise regulierbar. Die Mischeinrichtung 4 ist vorzugsweise eine nach Art einer Venturi-Düse ausgebildete Mischdüse.

Sofern mit dieser Anordnung Milchschaum erzeugt werden soll, so wird das Schaltventil 7 in die erste Schaltstellung verstellt und das Absperrventil 10 geöffnet. Damit kann Wasserdampf von der Heizung 3 über das Schaltventil 7 zur Mischeinrichtung 4 geführt werden. Gleichzeitig kann über die Leitung 11, die Drossel 12 und das offene Absperrventil 10 Luft über den Eingang 9 angesaugt werden, so dass Luft in die Mischeinrichtung 4 eingesaugt wird, zusammen mit Milch, die über die Leitung 5 angesaugt wird.

Sofern die Milchschaumerzeugung beendet ist, wird das Schaltventil 7 umgeschaltet in die zweite Schaltstellung. Das Absperrventil 10 bleibt geöffnet. Der restliche Heißdampf kann über die Leitung 8, das Absperrventil 10 zum zweiten Auslass 9 hin abgeleitet werden. Sofern lediglich die Erhitzung von Milch erwünscht ist, wird das Schaltventil 7 in die erste Schaltstellung verstellt, die in der Zeichnung gezeigt ist. Das Absperrventil 10 wird geschlossen. Damit wird der gesamte, mittels der Heizung 3 erzeugte Dampfstrom der Mischeinrichtung 4 zugeführt, die über die Leitung 5 Milch ansaugt. Ein Ansaugen von Luft ist unterbunden, so dass keine Schaumbildung erfolgt, sondern nur eine Erhitzung der zugeführten Milch mittels Wasserdampf.

Zur Reinigung des Systems wird mit der Heizung 3 Wasser erhitzt, also kein Dampf erzeugt. Das Schaltventil 7 wird in die zweite Schaltstellung verstellt, so dass das heiße Wasser bei geschlossenem Absperrventil 10 über die Drossel 12 zur Mischeinrichtung 4 geleitet wird. Dies ist vorzugsweise über einen relativ kurzen Zeitraum der Fall. Anschließend oder alternativ wird das Schaltventil 7 in die erste Schaltstellung verstellt, so dass das mittels der Heizung 3 erzeugte Heißwasser direkt zur Mischeinrichtung 4 geführt wird und diese spült, wobei gleichzeitig das möglicherweise noch in der Drossel 12 befindliche Restwasser aus dem Spülvorgang mitgesaugt wird, gegebenenfalls bei geöffnetem Absperrventil 10.

Mit der erfindungsgemäßen Ausgestaltung wird eine Verschmutzung der Drossel 12 beziehungsweise der kleinen Luftdüsen vermieden, und es wird ein Nachtropfen von Milchschaum nach Beendigung des Milchschaumerzeugungsvorganges vermieden, da restlicher Wasserdampf nicht aus der Mischeinrichtung 4 abtropft, sondern über die Zusatzleitungen zu der Auffangschale geführt wird.

Die Erfindung ist nicht auf das Ausführungsbeispiel beschränkt.

## Patentansprüche

1. Elektrische Getränkezubereitungsmaschine mit einer Pumpe (2) für die Zufuhr von Frischwasser, einer Heizung (3) zur Erhitzung des Frischwassers, einer Einrichtung zur Zufuhr von Milch, einer Einrichtung zur Zufuhr von Luft, einer Mischeinrichtung (4) zur Mischung von Heißwasser, Wasserdampf, Milch und/oder Luft, sowie einer Abgabevorrichtung für die Mischung an ein Behältnis (6), wobei die Mischeinrichtung (4) an den Wasserdampf-oder Heiß-Wasser-Auslauf der Heizung (3) angeschlossen ist und in die Mischeinrichtung (4) eine Luftzufuhrleitung und eine Milchzufuhrleitung (5) mündet, zwischen Heizung (3) und Mischeinrichtung (4) ein Schaltventil (7) eingefügt ist, das in einer ersten Schaltstellung den Ausgang der Heizung (3) mit der Mischeinrichtung (4) verbindet und in einer zweiten Schaltstellung den Ausgang der Heizung (3) mit einer Leitung (8) verbindet, die zu einem zweiten Auslass (9), insbesondere einer Auffangschale führt, **dadurch gekennzeichnet,**
**dass** in die zum zweiten Auslass (9) führende Leitung (8) ein Absperrventil (10) eingefügt ist, mittels dessen die Leitung gesperrt oder geöffnet werden kann, und
**dass** von der zum zweiten Auslass (9) führenden Leitung (8) zwischen Absperrventil (10) und Schaltventil (7) eine dritte Leitung (11) abgezweigt ist, die mit der Milchzufuhrleitung (5) verbunden ist und in die eine Drossel (12) eingefügt ist.

2. Getränkezubereitungsmaschine nach Anspruch 1, **dadurch gekennzeichnet, dass** die Drossel (12) regulierbar ist.

3. Getränkezubereitungsmaschine nach einem der Ansprüche 1 oder 2,
**dadurch gekennzeichnet, dass** die Mischeinrichtung (4) eine nach Art einer Venturi-Düse ausgebildete Mischdüse ist

4. Getränkezubereitungsmaschine nach einem der Ansprüche 1 bis 3, **dadurch gekennzeichnet, dass** das Schaltventil (7) und/oder das Absperrventil (10) als Magnetventil ausgebildet ist.

5. Getränkezubereitungsmaschine nach einem der Ansprüche 1 bis 4, **dadurch gekennzeichnet, dass** das Verhältnis von Schaum zu Milch durch getaktetes Schalten des Ventiles (10) einstellbar ist.

## Claims

1. An electric drink preparation machine comprising a pump (2) for supplying fresh water, a heating system (3) for heating the fresh water, a device for supplying milk, a device for supplying air, a mixing device (4) for mixing hot water, water vapor, milk, and/or air, and a delivery device for the mixture to a container (6), the mixing device (4) being connected to the water vapor or hot water outlet of the heating system (3), and an air inlet line and a milk inlet line (5) terminating in the mixing device (4), a switching valve (7) being arranged between heating system (3) and mixing device (4), said switching valve (7), in a first switching position, connecting the output of the heating system (3) to the mixing device (4) and, in a second switching position, connecting the output of the heating system (3) to a line (8) leading to a second outlet (9), in particular a collecting vessel,
**characterized in**
**that** in the line (8) leading to the second outlet (9), a shut-off valve (10) is arranged, by means of which the line can be shut off or opened, and that from the line (8) leading to the second outlet (9), between shut-off valve (10) and switching valve (7), a third line (11) is branched that is connected to the milk inlet line (5) and that is equipped with a throttle (12).

2. The electric drink preparation machine according to claim 1, **characterized in that** the throttle (12) can be regulated.

3. The electric drink preparation machine according to one of claims 1 or 2, **characterized in that** the mixing device (4) is a mixing nozzle of the Venturi nozzle type.

4. The electric drink preparation machine according to one of claims 1 to 3, **characterized in that** the switching valve (7) and/or the shut-off valve (10) is configured as a solenoid valve.

5. The electric drink preparation machine according to one of claims 1 to 4, **characterized in that** the ratio of foam to milk can be adjusted by cycled switching of the valve (10).

## Revendications

1. Machine de préparation de boissons électrique comprenant une pompe (2) pour l'alimentation d'eau fraîche, un système de chauffage (3) pour le chauffage de l'eau fraîche, un dispositif pour l'alimentation de lait, un dispositif pour l'alimentation d'air, un dispositif mélangeur (4) pour le mélange de l'eau chaude, de la vapeur d'eau, du lait, et/ou de l'air, et un dispositif de distribution pour le mélange à un conteneur (6), le dispositif mélangeur (4) étant lié à la sortie de la vapeur d'eau ou de l'eau chaude du système de chauffage (3), et une ligne d'entrée d'air et une ligne d'entrée de lait (5) débouchant dans le dispositif mélangeur (4), une soupape de commutation (7) étant disposée entre le système de chauffage (3) et le dispositif mélangeur (4), la soupape de commutation (7), dans une première position de commutation, liant la sortie du système de chauffage (3) au dispositif mélangeur (4) et, dans une deuxième position de commutation, liant la sortie du système de chauffage (3) à une ligne (8) menant à une deuxième sortie (9), en particulier un bac collecteur,
**caractérisée en ce**
**que** dans la ligne (8) menant à la deuxième sortie (9), une soupape d'arrêt (10) est disposée, au moyen de laquelle la ligne peut être fermée ou ouverte, et
**qu'**à partir de la ligne (8) menant à la deuxième sortie (9), entre la soupape d'arrêt (10) et la soupape de commutation (7), une troisième ligne (11) est branchée qui est liée à la ligne d'entrée de lait (5) et qui est pourvue d'un étranglement (12).

2. Machine de préparation de boissons électrique selon la revendication 1, **caractérisée en ce que** l'étranglement (12) peut être réglé.

3. Machine de préparation de boissons électrique selon une des revendications 1 ou 2, **caractérisée en ce que** le dispositif mélangeur (4) est une buse de mélange du type Venturi.

4. Machine de préparation de boissons électrique selon une des revendications 1 à 3, **caractérisée en ce que** la soupape de commutation (7) et/ou la soupape d'arrêt (10) est configurée comme une électrovanne.

5. Machine de préparation de boissons électrique selon une des revendications 1 à 4, **caractérisée en ce que** le rapport de mousse à lait peut être réglé par commutation cadencée de la soupape (10).
